# EUROPEAN PATENT SPECIFICATION

(11) **EP 0 369 179 B1**
(45) Date of publication and mention of the grant of the patent: **12.05.1993**
(21) Application number: 89119365.8
(22) Date of filing: 18.10.1989
(51) Int. Cl.: B60T 8/88

(54) **Antilock control device**
Blockierschutzregelsystem
Système de contrôle antiblocage

(30) Priority: 22.10.1988 JP 266970/88
(43) Date of publication of application: 23.05.1990
(73) Proprietor: SUMITOMO ELECTRIC INDUSTRIES, LTD., Osaka-shi, Osaka 541 (JP)
(72) Inventor: Tanaka, Hirohisa c/o Itami Works of, Itami-shi Hyogo (JP)
(74) Representative: Glawe, Delfs, Moll & Partner

(56) References cited:
- EP-A- 0 193 335
- EP-A- 0 328 081
- US-A- 4 316 641

## Description

The present invention relates to an antilock control device for use in a 4-wheel-drive motor vehicle which is capable of detecting any malfunctioning wheel speed sensors.

An antilock control device is used to control the slip ratio of each wheel, which is given by (vehicle speed minus wheel speed)/ vehicle speed x 100%, to such a range in which the friction between the road surface and the tire is optimum. Therefore the vehicle speed and the wheel speed are two important factors for the antilock control. The vehicle speed and the wheel speed are calculated on the basis of the signals from wheel speed sensors.

If any of the wheel speed sensors should fail and supply wrong signals to the antilock control device it might make a misjudgement which can result in a grave accident.

The US-PS 4 316 641 shows a anti-lock-control system, in which a shutdown signal is generated to disable the wheel antilock-control system in the event of a malfunction, as determined by the current presence of a wheel slip signal and a low wheel speed signal, which have been generated by the same wheel, for a predetermined period of time. This predetermined period of time must be sufficient to allow a normally operative antilock control system to correct a slipping wheel before it locks up.

Another prior art antilock-control device was adapted to judge that wheel speed sensor is malfunctioning, if this particular wheel sensor is producing sensor signals corresponding to a wheel speed lower than a predetermined value, when the estimated vehicle speed, which is calculated from the wheel speed signals supplied from the wheel speed sensors, has reached the predetermined value.

Both prior art antilock-control devices will present a problem if used in a 4-wheel drive vehicle. Namely if one of its wheels spins, the estimated vehicle speed can get larger than the actual vehicle speed. The antiblock device will make a wrong judgement that the wheel speed sensors for the wheels other than the spinning wheel are malfunctioning.

It is an object of the present invention to provide an antilock control device which is capable of detecting with accuracy any wheel speed sensors which are malfunctioning.

In accordance with the present invention, that antilock control device further comprises first means for the detecting a wheel which is rotating at the lowest speed of all the vehicle wheels, second means for detecting that all of the other wheels except that wheel rotating at the lowest speed of all the wheels are rotating at speeds higher than a first predetermined value, third means for detecting that the difference between the highest and lowest ones of the wheel speeds of said other wheels are below a predetermined value, fourth means for detecting that the wheel speed of said wheel rotating at the lowest speed of all the wheels is not more than a second predetermined value, which is smaller than said first predetermined value, fifth means for detecting that the state in which all the first, second, third and fourth means are producing outputs lasts for a longer period than a predetermined time period, and means for determining that said wheel speed sensor of the wheel rotating at the lowest speed is malfunctioning if there is an output from that fifth means.

Other features and objects of the present invention will become apparent from the following description taken with reference to the accompanying drawings, in which:
Fig. 1 is a schematic view of the antilock control device embodying the present invention; and
Fig. 2 is a flow chart showing the process for detecting wheel speed sensors in trouble.

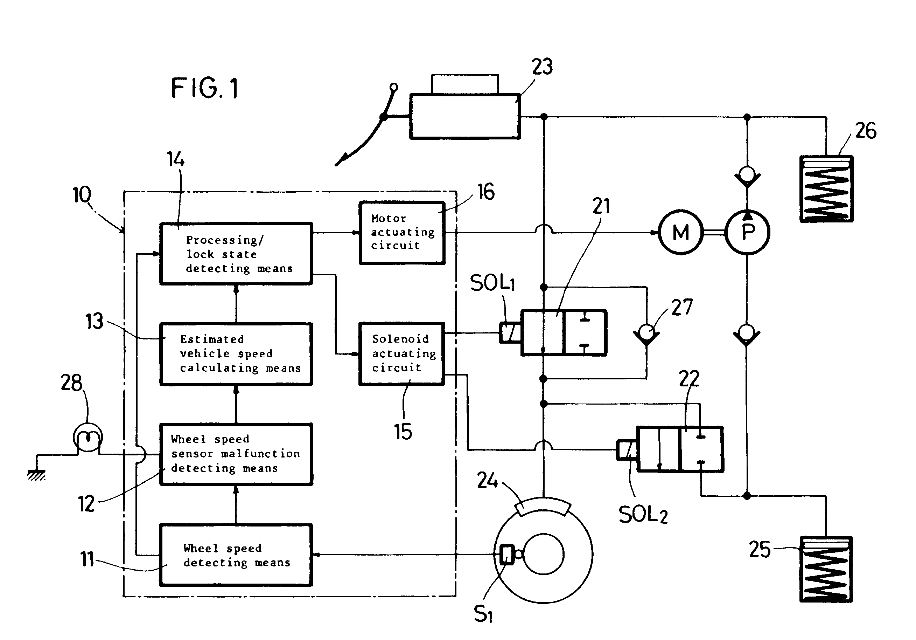

Fig. 1 shows an antilock control assembly for a four-wheel drive motor vehicle. The signals from wheel speed sensors S1 to S4 (only one sensor S1 is shown in the drawing for simplicity) are fed into an electronic control device 10 in which various arithmetic operations and judgements are carried out based upon the sensor signals to produce control signals for a hydraulic circuit.

More specifically, the signals from the wheel speed sensor S1, which are AC voltage signals, are converted into pulses and fed into a wheel speed detecting unit 11 which counts the number of pulses and feeds the results as wheel speed signals into a unit 12 for detecting any wheel speed sensors malfunctioning. It then checks the input signals based upon logic (described later) to determine whether or not any of the wheel speed sensors S1 to S4 is out of order. If judged so, a warning lamp 28 is turned on or any other necessary measure is taken. If the sensors are judged to be in order, the vehicle speed is estimated from the wheel speed signals in an estimated vehicle speed calculating unit 13. The estimated vehicle speed can be calculated in various ways. For example, only the sensor signal representing the fastest wheel speed may be selected and filtered suitably before calculation.

Next, it is checked in a processing/lock state detecting unit 14 whether or not the deceleration has dropped below a predetermined value or whether or not the slip speed (which is the difference between the estimated vehicle speed and the wheel speed) has exceeded a predetermined value to determine whether or not each wheel is showing a tendency to lock. If so judged, a pressure reducing command will be given to a solenoid actuating circuit 15, which in response will energize solenoids SOL1 and SOL2. This will move a pressure control valve 21 to the lefthand side of the figure, thus shutting off the hydraulic circuit leading from the master cylinder 23 to a wheel cylinder 24, and move another pressure control valve 22 upwards, thus forming fluid communication between the wheel cylinder 24 and a reservoir 25. At the same time, a motor actuating circuit 16 will actuate a motor M to feed the brake fluid in the reservoir 25 back into an accumulator 26 and the master cylinder 23. The braking pressure thus drops.

When the wheel speed begins to increase and the deceleration or slip speed exceeds a predetermined reference value, it is judged that the locking tendency has subsided. Now the lock state detecting unit 14 will give a pressure increase command to the solenoid actuating circuit 15 to deenergize the solenoids SOL1 and SOL2 to return the pressure control valves 21 and 22 to the positions shown in Fig. 1. Thus the pressure source will communicate with the wheel cylinder 24, so that the braking pressure will increase.

When it is necessary to interpose a pressure hold command after a pressure increase or pressure reduction command has been given, the solenoid SOL1 is energized and the solenoid SOL2 is deenergized, so that the pressure control valve 21 will move to left to shut off the hydraulic circuit. In contrast, the pressure control valve 22 remains in the position shown, sealing off hydraulic oil in the wheel cylinder 24. The brake pressure thus remains unchanged. In Fig. 1, numeral 27 designates a bypass valve.

The conditions and timing for giving a pressure hold command while a pressure reduction command is being given may be determined at discretion. For example, it may be given when the duration of the pressure reduction command has reached a predetermined time or when the wheel deceleration has exceeded a threshold value.

Similarly, the pressure increase command and the pressure reduction command may be given alternately under different conditions at different timings. Ordinarily, the pressure hold commands are given at equal time intervals by use of e.g. a pulse generator.

Other indices than the deceleration or the slip speed may be used in judging whether the wheels are on the way toward or recovering from the locking state.

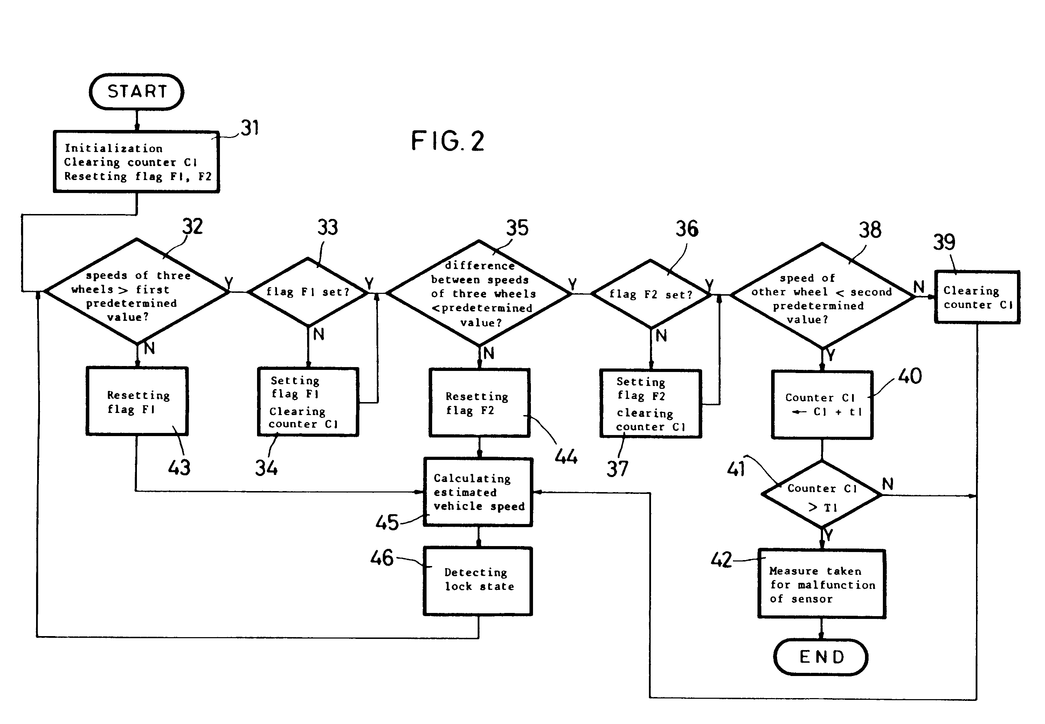

Next, a program stored in the malfunction detecting unit 12 for wheel speed sensors will be described with reference to Fig. 2.

First, the program is initialized in Step 31. The initialization includes clearing a counter C1 and resetting flags F1 and F2. The counter C1 serves as a timer, which will be described later. The flag F1 is a marker which indicates whether or not the wheel speeds of any three of the four wheels exceeded a first predetermined value in the previous cycle. The flag F2 is a marker which indicates whether or not the difference between the wheel speeds of the fastest and slowest ones of the three wheels is smaller than a predetermined value.

In Step 32, it is determined whether or not the wheel speeds of any three of the four wheels are larger than the first predetermined value, which is larger than a second predetermined value to be described later, namely whether or not the vehicle is travelling at a predetermined cruising speed. If not, the flag F1 will be reset in Step 43 and the ordinary antilock control is carried out in Steps 45 and 46. If judged Yes in Step 32, it will be determined in Step 33 whether or not the flag F1 is set, namely whether or not the wheel speeds of the three wheels exceeded the first predetermined value in the previous cycle. If judged No, which means that the first predetermined value has been reached for the first time in the current cycle, the program will proceed to Step 35 after setting the flag F1 and clearing the counter C1 in Step 34.

In Step 35, it is determined whether or not the wheel speed difference among the three wheels is within a rather limited range, in other words, whether or not the three wheels are rotating at substantially the same speed. If not, the flag F2 will be reset, so that the program will proceed to the ordinary antilock control routines 45 and 46.

If judged Yes in Step 35, it is checked in Step 36 whether or not the flag F2 is set to see whether or not the decision was Yes in Step 35 in the previous cycle. If judged No, which means that the wheel speed difference among the three wheels has dropped below the predetermined value for the first time in the current cycle, the program will proceed to Step 38 after setting the flag F2 and clearing the counter C1 in Step 37.

In Step 38, it is determined whether or not the wheel speed of the remaining one wheel is smaller than the second predetermined value, which is considerably smaller than the first predetermined value, so as to judge whether the wheel is rotating at a considerably lower speed than the other three wheels, which are rotating at substantially constant speeds. If judged No, the counter C1 will be cleared in Step 39, so that the program will proceed to the ordinary antilock control routines 45 and 46.

If judged Yes in Step 38, the counter C1 is incremented by a unit cycle time t1 in Step 40 and the content of the counter C1 is checked in Step 41 to see if it has exceeded a predetermined time interval T1. If judged No in Step 41, the program will proceed to the ordinary antilock control routines 45 and 46.

If the counter C1 counts the time T1 or more, the sensor for the remaining one wheel is judged to be in trouble. Necessary procedures will be subsequently carried out in Step 42 such as turning on a warning lamp and stopping the antilock control.

In the initial cycle, three wheels are selected at random in Step 32. If it turned out in any subsequent cycle that the "remaining" one wheel is normal and the wheel speeds of any three wheels other than the combination of the initially selected three wheels exceed the predetermined value, these three wheels are now selected as "the three wheels" in Step 32. Thereafter, the selection of "the three wheels" is made in every cycle in the same manner.

## Claims

1. An antilock control device comprising wheel speed sensors (S1 - S4), a processing/lock state detecting means (10) for processing wheel speed signals from that wheel speed sensors, detecting a tendency of vehicle wheels to lock or to recover from a locked state, and giving a command to increase or decrease the braking pressure and a fluid pressure control circuit operative in response to the command from that processing/lock state detecting means (10),
characterized in that said device further comprises first means to detect a wheel which is rotating at the lowest speed of all the vehicle wheels, second means (32) to detect that all of the other wheels except that wheel rotating at the lowest speed of all the wheels are rotating at speeds higher than a first predetermined value, third means (35) to detect that the difference between the highest and lowest ones of the wheel speeds of said other wheels are below a predetermined value, fourth means (38) to detect that the wheel speed of said wheel rotating at the lowest speed of all the wheels is not more than a second predetermined value which is smaller than that first predetermined value, fifth means (41) to detect that the state in which all, the first, second, third and fourth the means (32,35 38) are producing outputs lasts for a longer period than a predetermined time period, and means that determine that said wheel speed sensor of the wheel rotating at the lowest speed is malfunctioning if there is an output from said fifth means (41).

## Patentansprüche

1. Blockierschutzregelsystem mit Radgeschwindigkeitssensoren (S1 bis S4) einer Bearbeitungs-/Blockierzustandsfeststellungsvorrichtung (10) zum Verarbeiten der Radgeschwindigkeitssignale von den Radgeschwindigkeitssensoren, die eine Tendenz eines Fahrzeugrades zum Blockieren oder zum Erholen vom Blockieren feststellt und ein Kommando gibt zum Erhöhen oder Erniedrigen des Bremsdruckes, und einer Fluiddrucksteuerschaltung, die in Abhängigkeit vom Kommando von der Bearbeitungs-/Blockierzustandsfeststellvorrichtung (10) arbeitet,
dadurch **gekennzeichnet,** daß das System ferner aufweist eine erste Vorrichtung zum Entdecken eines Rades, das mit der geringsten Geschwindigkeit von allen Fahrzeugrädern rotiert, eine zweite Vorrichtung (32) zum Feststellen, daß alle anderen Räder außer dem Rad, welches mit der geringsten Geschwindigkeit von allen Rädern rotiert, mit einer Geschwindigkeit rotieren, die höher ist als ein vorbestimmter Wert, eine dritte Vorrichtung (35) zum Feststellen, daß die Differenz zwischen der höchsten und der geringsten Radgeschwindigkeit der anderen Räder unterhalb einem vorbestimmten Wert liegt, eine vierte Vorrichtung (38) zum Feststellen, daß die Radgeschwindigkeit des Rades, welches mit der geringsten Geschwindigkeit von allen Rädern rotiert, nicht höher ist als ein zweiter vorbestimmter Wert, welcher geringer ist als der erste vorbestimmte Wert, eine fünfte Vorrichtung (41) zum Feststellen, daß der Zustand, in welchem alle, die erste, zweite, dritte und vierte Vorrichtung (32, 35, 38) Ausgangssignale erzeugen, einen längeren Zeitraum dauert als eine vorbestimmte Zeitperiode, und eine Vorrichtung zum Feststellen, daß der Radgeschwindigkeitssensor des Rades, welches mit der geringsten Geschwindigkeit rotiert, eine Fehlfunktion aufweist, wenn ein Ausgangssignal von der fünften Vorrichtung (41) vorliegt.

## Revendications

1. Dispositif de commande anti-blocage comprenant des tachymètres de roue (S1-S4), des moyens (10) de détection de l'état de traitement/blocage pour traiter des signaux de vitesse de roues provenant desdits tachymètres de roue, détecter une tendance des roues du véhicule à se bloquer ou à sortir d'un état de blocage, et donner un ordre d'augmentation ou de diminution de la pression de freinage et un circuit de commande de pression de fluide fonctionnant en réponse à l'ordre provenant des moyens (10) de détection de l'état de traitement/blocage ,
caractérisé en ce que ledit dispositif comprend en outre des premiers moyens pour détecter la roue qui tourne à la vitesse la plus basse de toutes les roues du véhicule, des seconds moyens (32) pour détecter si toutes les autres roues à l'exception de la roue tournant à la vitesse la plus basse tournent à des vitesses supérieures à une première valeur prédéterminée, des troisièmes moyens (35) pour détecter si la différence entre les vitesses de roueles plus élevées et les plus basses desdites autres roues est en dessous d'une valeur prédéterminée, des quatrièmes moyens (38) pour détecter si la vitesse de roue de ladite roue tournant à la vitesse la plus basse entre toutes les roues n'est pas plus grande qu'une seconde valeur prédéterminée qui est inférieure à ladite première valeur prédéterminée, des cinquièmes moyens (41) pour détecter si l'état dans lequel tous les moyens à savoir les premiers, deuxièmes, troisièmes et quatrièmes moyens (32, 35, 38) produisent des signaux de sortie dure plus longtemps qu'une période de temps prédéterminée, et des moyens pour déterminer que le tachymètre de roue de la roue qui tourne à la vitesse la plus basse ne fonctionne pas correctement si un signal de sortie est émis par lesdits cinquièmes moyens (41).
